# EUROPEAN PATENT APPLICATION

(11) **EP 1 369 174 A1**
(43) Date of publication of application: **10.12.2003**
(21) Application number: 03012173.5
(22) Date of filing: 03.06.2003
(51) Int. Cl.: B01J 20/32, G01N 30/48

(54) **Carrier for chromatography, carrier for pre-treatment and kit for preparing the same**

(30) Priority: 03.06.2002 JP 2002160983
(71) Applicant: Shinwa Chemical Industries, Ltd., Kyoto-Shi, Kyoto-fu 612-8307 (JP)
(72) Inventor: Kanehara, Hideyuki, Shinwa Chem. Ind. Ltd., Kyoto-shi, Kyoto-fu, 612-8307 (JP); Wada,Hiroo, c/o Shinwa Chemical Industries Ltd, Kyoto-shi, Kyoto-fu 612-8307 (JP)
(74) Representative: VOSSIUS & PARTNER

(57) **Abstract**

A carrier for chromatography or a carrier for a pre-treatment comprises a carrier material consisting of a metal or a metal compound reactive with the sulfur-containing compound or a carrier material whose surface is coated with the foregoing metal or metal compound; and a sulfur-containing compound bonded to the surface of the foregoing carrier material and a kit for preparing a carrier for chromatography or a carrier for a pre-treatment comprises the foregoing carrier material; and a sulfur-containing compound. This carrier has a hydrophobic field established by groups such as octadecyl groups, which is never eliminated therefrom even under acidic and alkaline conditions; has thus a high separation power and a long service life; can easily be prepared within a short period of time; and therefore, the production cost thereof is quite low.

## Description

The present invention relates to a carrier, which may be used in the chromatography or a carrier for a pre-treatment and more specifically to a carrier for chromatography or a carrier for a pre-treatment, which comprises a carrier material whose surface is coated with a metal or a metal compound such as gold, silver, copper, platinum, iron, mercury, silver oxide, copper oxide, gallium arsenide or indium phosphide, or a carrier material consisting of a metal or a metal compound such as gold, silver, copper, platinum, iron or silver oxide and a sulfur-containing compound adhered or linked to the surface of the carrier material, as well as a kit for preparing the carrier for chromatography or the carrier for a pre-treatment.

The conventional carrier for chromatography or for a pre-treatment comprises porous silica to which monochlorodimethyloctadecylsilane or the like is linked through the hydroxyl groups present on the surface of the porous silica. These bonds (Si-O-C bonds) are hydrolyzed by the action of an acidic or alkaline eluting solution and the octadecyl groups are thus easily released from the surface of the carrier. For this reason, it is impossible to use a solvent having a pH value of not less than 8 as an eluent.

Accordingly, if using an eluting solution having a pH value of not less than 8, a cross-linkable polymer compound has been used as a material for preparing such a carrier. However, such a carrier suffers from problems in that it is quite expensive and has a low resolution as compared with the silica carriers.

When linking, for instance, monochlorodimethyloctadecylsilane with the hydroxyl groups of silica, at most 50% of the hydroxyl groups present on the silica are not linked with octadecyl groups and accordingly, the silica sometimes carries remaining free silanol groups of at most 50% of the total hydroxyl groups. The remaining silanol groups often adversely affect the separation power of the silica carrier and they are in general removed by subjecting the silica carrier to an end-capping treatment using, for instance, trimethylchlorosilane. However, it has been difficult to completely remove such remaining silanol groups because of, for instance, the steric hindrance.

When combining octadecyl groups or an end-capping agent to the silica surface an expensive reagent such as monochlorodimethyloctadecylsilane or trimethylchlorosilane should be used, an organic solvent, which loads the environment heavily, must be used in a large quantity and the linkages between the silica surface and the octadecyl groups are formed under severe and expensive conditions, for instance, at a high temperature for a long period of time.

As has been discussed above, in the carrier for the reversed phase chromatography technique and the carrier for pre-treatments obtained using the conventional porous silica carrier, a hydrophobic compound such as monochlorodimethyloctadecylsilane is chemically bonded to hydroxyl groups present on the surface of silica materials. In this case, however, the resulting Si-O-C linkages are hydrolyzed under acidic or alkaline conditions and as a result, the hydrophobic field established by groups such as octadecyl groups bonded to the silica surface is eliminated (such hydrophobic groups are released) from the silica surface and this in turn leads to the deterioration of the separation power or resolution of the resulting carrier.

Accordingly, it is an object of the present invention to provide or develop a carrier for chromatography and a carrier for a pre-treatment, whose hydrophobic field established by groups such as octadecyl groups is never eliminated (such hydrophobic groups are not released) therefrom even under acidic or alkaline conditions.

Moreover the silica per se is hydrolyzed under alkaline conditions and accordingly, it has a reduced resolution and a short service life as a carrier. Accordingly, it is also an object of the present invention to solve these problems.

In the conventional techniques, the silica is subjected to an end-capping treatment using a quite expensive reagent such as trimethylchlorosilane to solve the foregoing problem of the remaining silanol groups. This end-capping treatment would permit the preparation of a high quality carrier, but the resulting carrier is quite expensive. In addition, problems arise even when such a silica carrier is subjected to an end-capping treatment; for instance, silanol groups free of capping still remain in the carrier and the capping agent may be removed under acidic and alkaline conditions.

Accordingly, it is also an object of the present invention to solve these problems.

The formation of a hydrophobic field using monochlorodimethyloctadecylsilane and the end-capping treatment in accordance with the conventional techniques have been conducted using organic solvents such as dehydrated toluene under such severe conditions as a temperature of 110°C for a time of not less than 5 hours. Such a synthetic method requires the use of expensive reagents, the use of organic solvents, which load the environment heavily, an increased cost for treating the organic solvents prior to the disposal thereof and the use of a high temperature and a long time period for the synthesis and these requirements would in turn increase the price of the final product.

Accordingly, it is also an object of the present invention to provide or develop a method for synthesizing the foregoing carriers, which permits the solution of the foregoing various problems, the use of cheap reagents and the synthesis thereof at room temperature within a short period of time.

Regarding the conventional carrier for chromatography and that for a pre-treatment, they are prepared by bonding, for instance, octadecyl groups to the surface of a silica material prior to packing a column therewith. This method is quite inefficient since the carrier should be prepared in advance when it 13 necessary to use the same, The present invention likewise intends to Solve this problem.

According to the present invention it has been found that the foregoing problems can effectively be solved by providing a carrier for chromatography or a carrier for a pre-treatment obtained by reacting the surface of a carrier material, which comprises a carrier material for chromatography or a carrier material for a pre-treatment whose surface is coated with a metal or a metal compound, or the surface of a carrier material consisting of a metal or a metal compound, with a sulfur-containing compound to thus combine the sulfur-containing compound with the surface of the carrier material.

According to an aspect of the present invention, there is provided a carrier for chromatography or a carrier for a pre-treatment which comprises a carrier material consisting of a metal or a metal compound reactive with a sulfur-containing compound or a carrier material whose surface is coated with the foregoing metal or metal compound, wherein said suitor-containing compound is combined with the surface of the carrier material.

According to another aspect of the present invention, there is also provided a kit for preparing a carrier for chromatography or a carrier for a pre-treatment, which comprises a carrier material consisting of a metal or a metal compound reactive with a sulfur-containing compound or a carrier material whose surface is coated with the foregoing metal or metal compound; and said sulfur-containing compound.
Fig 1 is a chromatogram obtained when separating a sample containing uracil, naphthalene and diphenyl using a column packed with octadecyl-modified copper fine particles.
Fig. 2 is a chromatogram obtained when separating a sample containing uracil, naphthalene and diphenyl using a column packed with octadecyl-modified silver fine particles.
Fig. 3 is a chromatogram obtained when separating a sample containing uracil, naphthalene and diphenyl using a column packed with octadecyl-modified gold-carrying silica particles.
Fig. 4 is a chromatogram obtained when separating a sample containing uracil, naphthalene and diphenyl using a column packed with copper fine particles and then subjected to an octadecyl-modification treatment.
Fig. 5 is a chromatogram obtained when separating a sample containing uracil, benzene, naphthalene and diphenyl using a column packed with octadecyl-modified silver-plated porous silica particles.

The present invention will bereunder be described in more detail.

The carrier material for chromatography or that for a pre-treatment used in the present invention is not restricted to any particular one inasmuch as it may be a carrier material usable in the chromatography. Therefore, the carrier material used herein may be a porous or non-porous one. Examples thereof usable herein are currently used ones such as those prepared from silica, porous silica, glass, cellulose, ceramics, carbon and porous cross-linkable polymeric compounds (such as styrene-divinylbenzene copolymers and polymethacrylates) as well as those produced from metals or metal compounds such as gold, silver, copper, platinum, iron, mercury, silver oxide, copper oxide, gallium arsenide and indium phosphide. The shape of the carrier material may be any one or may arbitrarily be selected and examples thereof are fiber like, spherical and crushed shapes. If the carrier material has a fibrous shape, the diameter thereof is desirably in the order of 1 mm to 1 nm. In case of a carrier material having a spherical or crushed shape, the particle size thereof desirably ranges from about 1 mm to 1 nm. Moreover, it is also possible to use, as a carrier material, the inner walls of fine tubes or those of the fine tubes present within microchips.

When using carrier materials other than metals or metal compounds reactive with suitor-containing compounds, the surfaces of such carrier materials are coated with metals or metal compounds reactive with sulfur-containing compounds prior to use the same. The method for coating the carrier with such a metal or a metal compound reactive with a sulfur-containing compound is not restricted to any particular one inasmuch as it can form a thin film on the carrier material. Examples of such methods appropriately used herein are chemical plating, vapor deposition, vapor phase growth, chemical vapor phase deposition and alternating (layer by layer) adsorption techniques. The amount of the metal or metal compound to be applied to the carrier material or the thickness of the film formed thereon is not restricted to any specific range inasmuch as the resulting film can satisfactorily show the characteristic properties as a carrier material for chromatography or for a pre-treatment and the amount thereof desirably falls within the range of from about 1 mg/m² to 2000 g/m² or the thickness of the film suitably ranges from about 0.05 nm to 10 µm. When it is intended to improve the resistance to acids and/or alkalis of the carrier material, it is desirable to cover not less than 30% of the surface of a carrier material such as silica.

The sulfur-containing compounds usable in the present invention are not restricted to specific ones inasmuch as they may be linked with the foregoing metal or metal compounds and specific examples thereof are sulfide compounds (for instance, dialkyl sulfides such as diheptyl sulfide and diaryl sulfide such as diphenyl sulfide), disulfide compounds (for instance, dialkyl disulfides such as diheptyl disulfide and diaryl disulfide such as diphenyl disulfide), alkyl xanthogenic acid or salts thereof (for instance, pentyl xanthogenic acid and salts thereof) and thiol-modified DNA's (for instance, oligodeoxylnudeotide phosphorothioate). Among these, preferably used herein are alkane thiol compounds having 4 to 40 carbon atoms, with octadecyl mercaptan being particularly preferred.

Moreover, the sulfur-containing compounds used in the present invention may comprise at least one functional group selected from the group consisting of hydroxyl, carboxyl and amino groups. When the compound has at least two functional groups, they may be the same or different. These functional groups may appropriately be selected while taking into consideration the intended characteristic properties of the carrier for chromatography or that for a pre-treatment.
Solvents used for the dissolution of the sulfur-containing compounds are not restricted to specific ones inasmuch as they can dissolve the same and specific examples thereof usable herein are acetone, acetonitrile, methanol and ethanol. Among these solvents, particularly preferably used herein are ethanol and acetone, which relatively slightly load the environment.

The carrier material may, for instance, be coated with such a sulfur-containing compound by dissolving the sulfur-containing compound in the foregoing solvent to thus prepare a solution having a concentration ran ging from 0.01 to 10% by mass, dispersing the carrier material in this solution, stirring the mixture, removing the unreacted sulfor-containing compound and then drying the carrier material.

The characteristic properties of the present invention will hereunder be described while taking a silica carrier material by way of example.

In the present invention, the silica carrier material is coated with a metal or a metal compound in order to improve the stability of the carrier material, which may be hydrolyzed under acidic and/or alkaline conditions. The coverage of the silica surface would permit the improvement of the stability of the silica and the silica is completely free of any remaining silanol group. Therefore, the silica carrier material never requires the use of any end-capping treatment.

The groups such as octadecyl groups, which may establish a separation field within a carrier material, are introduced into or bonded to the carrier material while making use of the reaction of a sulfur-containing compound with a metal or a metal compound such as gold, silver, copper, platinum, iron, mercury, silver oxide, copper oxide, gallium arsenide and indium phosphide. This reaction is identical to that used in the current method for forming a self-structirizing (i.e., self-assembled) film. The resulting self structurizing film (i.e., self-assembled monolayer) is stabilized by the direct linkage between the sulfur atoms of the sulfur-containing compound and the metal or metal compound and the hydrophobic interaction between the alkyl chains on the sulfur-containing compound such as an alkane thiol. Therefore, the self structzuizing film is a quite strong or firm film and the linkages present therein are not easily cleaved by the action of an acid or an alkali.

The inventors have presumed that the use of such a firm self-structurizing film as the separation field of a carrier for chromatography or that fox a pre-treatment would permit the formation of a carrier for chromatography or that for a pre-treatment, which is excellent in the resistance to acids and/or alkalis and which has never been developed. In the present invention, the foregoing problems concerning the conventional carrier for chromatography or that for a pre-treatment are solved on the basis of such ways of thinking or more specifically by coating a carrier material such as porous silica with metal or a metal compound reactive with a sulfur-containing compound and making use of the reaction of such a sulfur-containing compound with the metal or the metal compound.

Monochlorodimethyloctadecylsilane or the like used in the synthesis of a carrier for the reversed phase chromatography is quite expensive. Contrary to this, the present invention uses a quite cheap sulfur atom-containing compound for establishing a separation field in order to solve this problem. Moreover, the solvent used in the conventional technique for the synthesis of a carrier is, for instance, anhydrous toluene, which heavily loads the environment upon the abandonment of the same.

The present invention has solved this problem by mainly using ethanol or acetone as a solvent used in the reaction for forming linkage between the sulfur-containing compound and the metal or metal compound.

In addition, in the conventional method for synthesizing a carrier, the establishment of a separation field on silica using, for instance, monochlorodimethyloctadecyisilane must be conducted under anhydrous or dehydrated conditions since the silane compound used is hydrolyzed due to water or moisture present in the reaction system. On the other hand, in the method according to the present invention, the synthesis of the carrier is not adversely affected by the presence of any moisture and it is not necessarily conducted under dehydrated conditions. Therefore, the method of the invention would permit the simple preparation of a carrier.

In respect of the formation of a self structurizing film by the use of a sulfur-containing compound, the use of at least two sulfur-containing compounds may allow the formation of a self structuring film having a surface configuration on the order of nanometers or a nano-size. In the present invention, the simultaneous use of at least two kinds of sulfur-containing compounds permits the unique chromatographic separation, which cannot be achieved by the use of a single sulfur-containing compound. For instance, when using the combination of 1-octanethiol and 8-hydroxy-1-octanethiol as the sulfur-containing compounds, the polarity of the resulting carrier can freely be adjusted or controlled.

Alternatively, it is also possible to react sulfur-containing compounds with a metal or a metal compound in a column by packing the column with a carrier material coated with a metal or a metal compound in advance and loading the column with desired kinds of sulfur-containing compounds at a desired time. This is because the reaction of the sulfur-containing compound with the metal or metal compound used in the present invention may proceed at room temperature in a short period of time. Thus, the packing efficiency may considerably be improved and an optimum carrier can be prepared in place by appropriately selecting sulfur-containing compounds depending on specific purposes.

In the present invention, the term "chromatography" used means liquid chromatography such as reversed phase chromatography, normal phase chromatography, thin layer chromatography, anion-exchange chromatography, cation-exchange chromatography and ion pair chromatography as well as affinity chromatography, electrophoretic chromatography and gas chromatography. Various kinds of carriers for these chromatography techniques can be prepared by changing, for instance, the kinds of sulfur-containing compounds to be used, the combination and the ratio of sulfur-containing compounds to be used simultaneously.

The term "pre-treatment" used herein means various treatments such as selective or non-selective-adsorption, desorption and concentration of subject substances and removal of unnecessary substances and desalting.

The surface of the carrier material for chromatography or that for a pre-treatment such as silica according to the present invention is coated with a desired metal or metal compound reactive with a sulfur-containing compound and therefore, the present invention permits the complete elimination or solution of the problem concerning the carrier instability observed when using an acidic or alkaline eluting solution for the chromatographic separation. Moreover, the problem of remaining silanol groups, the presence of which becomes a cause for the tailing of a separation peak, can likewise be solved since these groups are concealed by the coating layer of the metal or metal compound and accordingly, the use of the carrier of the present invention would provide a sharp separation peak free of any tailing.

Moreover, the preparation of the carrier for chromatography or that for a pre treatment according to the present invention never requires the use of any severe reaction condition such as the use of an anhydrous organic solvent for the formation of a separation layer through, for instance, the octadecyl-modification and the use of a high reaction temperature and a long reaction time. More specifically, ethanol or acetone may, for instance, be used as such a reaction solvent and the desired separation layer may be introduced into the carrier for chromatography or that for a pre-treatment by, for instance, the octadecyl-modification carried out under moderate reaction conditions, for instance, at room temperature and for a short period of time.

Moreover, the method for preparing the carrier of the present invention never requires the use of any end-capping treatment for the remaining silanol groups since the silanol groups are almost completely concealed by the application of a coating layer of a metal or metal compound. This would considerably reduce the load on the environment and the time required for the preparation of a carrier for chromatography or that for a pre-treatment can likewise considerably be reduced.

In case of a carrier for reversed phase chromatography or that for a pre-treatment, which is packed with a reversed phase filling material, it is most common to use octadecyl mercaptan as a sulfur-containing compound, but various kinds of carriers for chromatography or those for pre-treatments, which are adapted for various applications, can be prepared by the use of alkane thiols having various chain lengths, branched sulfur-containing compounds and thiol compounds having other functional groups in addition to thiol groups.

In addition, in case of a sulfur-containing compound carrying a functional group, it is easy that a protein may, for instance, be attached to the functional group and the resulting carrier can thus be applied to the affinity chromatography technique, sensors and immobilized enzymes. The self assembled monolayer can also be applied to a lab on a chip, for example, separation fields, reactors or pipelines.

If carrier materials for chromatography other than porous silica can be coated with metals or metal compounds reactive with a sulfur-containing compound, it is easy to apply the carrier materials other than porous silica to the chromatography. For instance, it is possible to apply a metal or a metal compound reactive with a sulfur-containing compound onto the inner walls of internal fine tubes of, for instance, microchips and to easily form a self-structurizing film of a sulfur-containing compound to thereby incorporate a chromatography function into the chip.

In the formation of a self-structurizing film from such sulfur-containing compounds, a film having a unique surface structure of a nano-size is formed when admixing at least two different sulfur-containing compounds. It is also possible even in the present invention to obtain a carrier having a unique separation ability, which has never been achieved before, by preparing self-structurizing film using at least two different sulfur-containing compounds to thus form a carrier having a unique surface structure.

According to the method of the present invention, a column can previously be packed with a carrier material, which has been coated with a metal or a metal compound reactive with a sulfur-containing compound, and desired kinds of sulfur-containing compounds are, as required, reacted with the metal or metal compound within the column to thus prepare a carrier for chromatography or that for a pre-treatment in place. In other words, the method of the present invention would permit the preparation of small numbers of various kinds of of carriers in an extremely high efficiency.

The present invention will hereunder be described in more detail with reference to the following Examples, but the scope of the present invention is not restricted to these specific Examples at all.

### Example 1

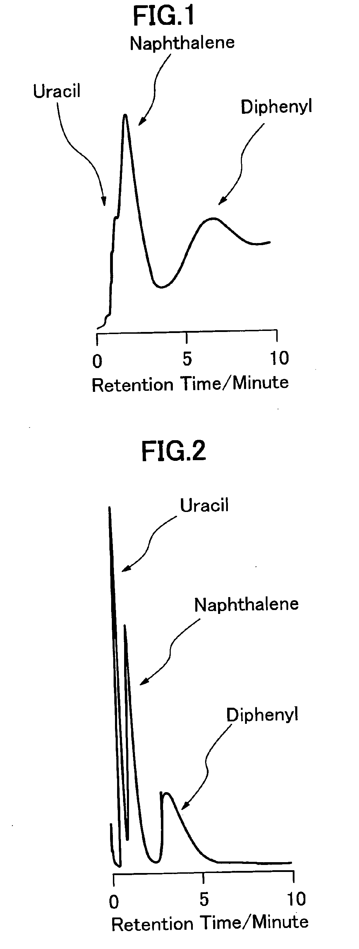

Copper fine particles (1.2 g; particle size: about 70 µm) were admixed with a solution obtained by dissolving 0.14 g of octadecyl mercaptan in 10 mL of acetone to thus react them at room temperature overnight. The resulting octadecyl-modified copper fine particles were washed with acetone several times. After drying, the octadecyl-modified copper fine particles (about 0.3 g) were packed in a column having a length of 1 cm and an inner diameter of 4.0 mm. The particles were packed therein under a packing pressure of 50 kgf/cm². The resulting column was installed in a high performance liquid chromatography device LC-9A (available from Shimadzu Corporation, Kyoto-Fu, Japan) equipped with an ultraviolet-visible light detector SPD-6AV (available from Shimadzu Corporation, Kyoto-Fu,Japan). A 50% methanol solution containing uracil, naphthalene and diphenyl as a sample solution was eluted using a 20% methanol-water as an eluting solution at a flow rate of 0.3-mL /min and detected at a detection wavelength of 254 nm. The sample was separated into three peaks as shown in Fig. 1. Separately, copper particles free of any linked octadecyl mercaptan molecule were prepared and the resolution power thereof was evaluated by repeating the same procedures used above, but there was observed only one peak.

### Example 2

Silver fine particles (0.8 g; particle size: about 1 µm) were admixed with a solution containing 0.14 g of octadecyl mercaptan dissolved in 10 mL of acetone to thus react them at room temperature overnight. The resulting octadecyl-modified silver fine particles were washed several times with acetone. After drying, the octadecyl-modified silver fine particles (about 0.3 g) were packed in a column having a length of 1 cm and an inner diameter of 4.0 mm. The particles were packed therein under a packing pressure of 100 kgf/cm². The resulting column was installed in a high performance liquid chromatography device LC-9A equipped with an ultraviolet-visible light detector SPD-6AV A 50% methanol solution containing uracil, naphthalene and diphenyl as a sample solution was eluted using a 15% methanol-water as an eluting solution at a flow rate of 0.3 mL/min and detected at a detection wavelength of 254 nm. The sample was separated into three peaks as shown in Fig. 2. Separately, silver particles free of any linked octadecyl mercaptan molecule were prepared and the resolution power thereof was analyzed by repeating the same procedures used above, but there was observed only one peak.

### Example 3

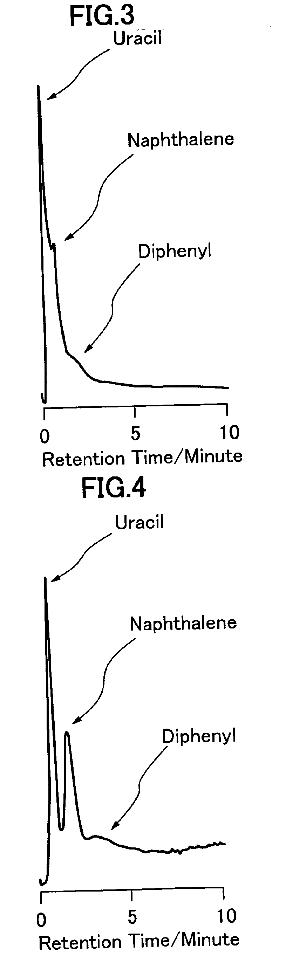

Porous silica fine particles (0.05g particle size 10 µm) for chromatography, which had been plated with gold, were admixed with a solution containing 0.3 g of octadecyl mercaptan dissolved in 2 mL of ethanol to thus react them at room temperature for 20 minutes. The resulting octadecyl-modified gold-plated silica fine particles were washed with acetone several times. After drying, the octadecyl-modified gold-plated silica fine particles (about 0.3 g) were packed in a column having a length of 1 cm and an inner diameter of 4.0 mm. The resulting column was installed in a high performance liquid chromatography device LC-9A equipped with an ultraviolet-visible detector SPD-6AV. A 50% methanol solution containing uracil, naphthalene and diphenyl as a sample solution was eluted using water as an eluting solution at a flow rate of 0.5 mL/min and detected at a detection wavelength of 254 nm. The sample was separated into three peaks as shown in Fig. 3.

### Example 4

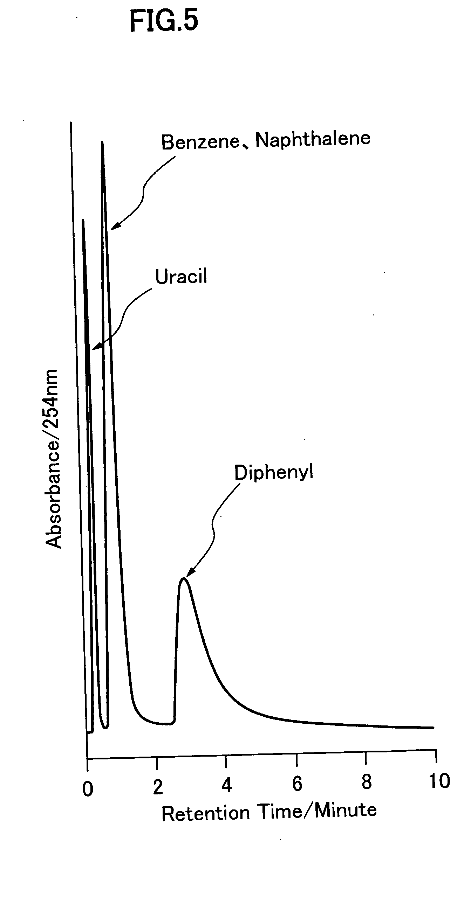

Copper fine particles (0.3 g, particle size: about 70 µm) were packed in a column having a length of 1 cm and an inner diameter of 4.0 mm. The particles were packed into the column under a packing pressure of 100 kgf/cm². A solution containing 0.14 g of octadecyl mercaptan dissolved in 10 mL of acetone was introduced into a packer connected to the column and eluted for 30 minutes at a flow rate of 1 mL/min using acetone as a solvent and a pump LC-9A. The column was removed from the packer and installed in a high performance liquid chromatography device LC-9A equipped with an ultraviolet-visible light detector SPD-6AV. A 50% methanol solution containing uracil, naphthalene and diphenyl as a sample solution was eluted using a 40% methanol-water solution as an eluting solution at a flow rate of 0.5 mL/min and detected at a detection wavelength of 254 nm. The sample was separated into three peaks as shown in Fig. 4

### Example 5

Silver fine particles (0.8 g; particle size: about 1 µm) were admixed with a solution containing 0.14 g of octadecyl mercaptan dissolved in 10 mL of acetone to thus react them at room temperature overnight. The resulting octadecyl-modified silver fine particles were washed several times with acetone. After drying, the octadecyl-modified silver fine particles (0.28 g), in the dry condition, were packed in a column having a length of 1 cm and an inner diameter of 4.6 mm. The column was installed in a high performance liquid chromatography device LC-9A and 100 mL of a diethyl phthalate aqueous solution (2.3 × 10⁻⁵ was passed through the column at a flow rate of 1 mL/min to thus adsorb the diethyl phthalate on the particles. The substance was desorbed using 0.5 mL of methanol as a solvent. Thus, the absorbances observed before and after the adsorption were determined at an observation wavelength of 230 nm using an ultraviolet-visible spectrophotometer UV-1600 (available from Shimadzu Corporation, Kyoto-Fu, Japan). As a result, the rate of adsorption was found to be 42% and the rate of desorption was found to be 75%.

### Example 6

Porous silica particles (particle size: 5 µm and pore size: 1000Å) were plated with silver. Calculated thickness of silver plating was 0.015 µm. The particles (0.2g) were admixed with a solution of 0.0005 mole octadecyl mercaptan dissolved in 10 mL of acetone to thus react them at room temperature for 60 minutes. The resulting octadecyl-modified silver-plated silica fine particles were washed with acetone several times. After drying, the octadecyl-modified silver-plated silica fine partides were packed in a column having a length of 1 cm and an inner diameter of 4.0mm under a packing pressure of 100kgf/cm². The resulting column was installed in a high performance liquid chromatography device LC-9A equipped with an ultraviolet-visible detector SPD-6AV. A 50% methanol solution containing uracil, naphthalene and diphenyl as a sample solution was eluted using a 10% methanol-water solution as an fluting solution at a flow rate of 1 mL/min and detected at a detection wavelength of 254 nm. The sample was separated into three peaks as shown in Fig. 5.

## Claims

1. A carrier for chromatography or a carrier for a pre-treatment comprising a carrier material consisting of a metal or a metal compound reactive with a suitor-containing compound or a carrier material whose surface is coated with the foregoing metal or metal compound wherein said sulfur-containing compound is bonded to the surface of the carrier material.

2. The carrier for chromatography or the carrier for a pre-treatment of claim 1 wherein the metal or metal compound is at least one member selected from the group consisting of gold, silver, copper, platinum, iron, mercury, silver oxide, copper oxide, gallium arsenide and indium phosphide.

3. The carrier for chromatography or the carrier for a pre-treatment of claim 1 or 2 wherein the carrier material is a porous or non-porous carrier material.

4. The carrier for chromatography or the carrier for a pre-treatment of claim 1 or 2 wherein the carrier material is at least one member selected from the group consisting of gold, silver, copper, platinum, iron, mercury, silver oxide, copper oxide, gallium arsenide and indium phosphide.

5. The carrier for chromatography or the carrier for a pre-treatment as set forth in any one of claims 1 to 4 wherein the carrier material is silica, glass, cellulose, ceramics, carbon or a cross-linkable polymeric compound,

6. The carrier for chromatography or the carrier for a pre-treatment as set forth in any one of claims 1 to 5 wherein the carrier material is a spherical, fiber-like or crushed carrier material or the internal surface of fine tubes.

7. The carrier for chromatography or the carrier for a pre-treatment as set forth in any one of claims 1 to 6 wherein the sulfur-containing compound is an alkane thiol compound having 1 to 40 carbon atoms.

8. The carrier for chromatography or the carrier for a pre-treatment as set forth in claim 7 wherein the thiol compound comprises octadecyl mercaptan.

9. The carrier fort chromatography or the carrier for a pre-treatment as set forth in any one of claims 1 to 8 wherein the sulfur-containing compound comprises at least two kinds of sulfur-containing compounds.

10. A kit for preparing a carrier for chromatography or a carrier for a pre-treatment comprising a carrier material consisting of a metal or a metal compound reactive with a sulfur-containing compound or a carrier material whose surface is coated with the foregoing metal or metal compound; and said sulfur-containing compound reactive with the metal or metal compound.
